# EUROPEAN PATENT SPECIFICATION

(11) **EP 2 759 627 B1**
(45) Date of publication and mention of the grant of the patent: **28.09.2016**
(21) Application number: 13760969.9
(22) Date of filing: 24.01.2013
(51) Int. Cl.: F16J 13/12, D06B 23/18, F16J 13/20, D06B 5/16, D06B 23/14

(54) **SPOOLED YARN DYEING MACHINE COMPRISING AN AUTOMATIC CYLINDER HEAD LOCKING APPARATUS**
MASCHINE ZUR FÄRBUNG EINES AUFGESPULTEN GARNS MIT EINER AUTOMATISCHEN SPERRVORRICHTUNG FÜR EINEN ZYLINDERKOPF
MACHINE DE TEINTURE DE FIL BOBINÉ COMPRENANT UN APPAREIL DE VERROUILLAGE AUTOMATIQUE DE TÊTE DE CYLINDRE

(30) Priority: 13.03.2012 CN 201210065630
(43) Date of publication of application: 30.07.2014
(73) Proprietor: Advanced Manufacture Technology Center, China Academy of Machinery Science & Technology, Beijing 100083 (CN); Taian Companion Machinery Co., Ltd., Taian, Shandong 271000 (CN)
(72) Inventor: SHAN, Zhongde, Beijing 100083 (CN); LI, Shuguang, Beijing 100083 (CN); WU, Shuangfeng, Beijing 100083 (CN); SHEN, Minju, Beijing 100083 (CN); CHEN, Duifan, Shandong 271000 (CN); LIU, Lin, Shandong 271000 (CN); LU, Qingfu, Shandong 271000 (CN)
(74) Representative: Müller-Boré & Partner Patentanwälte PartG mbB
(86) International application number: PCT/CN2013/070953
(87) International publication number: WO 2013/135113

(56) References cited:
- EP-A2- 1 344 860
- WO-A1-02/095114
- WO-A1-2011/143840
- CN-A- 101 592 224
- CN-A- 101 613 924
- CN-A- 102 587 054
- CN-U- 201 862 775
- CN-U- 201 862 775
- CN-Y- 2 793 127
- CN-Y- 201 255 232
- CN-Y- 201 370 976
- CN-Y- 201 370 976
- US-A- 3 011 327

## Description

### Technical field of the invention

The present invention relates to the field of mechanical technologies, and particularly to a spooled yarn dyeing machine comprising a vat cover automatic locking apparatus.

### Background of the invention

China is a famous textile country, and the textile industry, being a traditional pillar industry, plays a very important role in the national economy. At present, the domestic textile industry, which is labour-intensive with long technological processes, high working intension, low levels of mechanization and automation of production equipment, low production efficiency and backward overall equipment technology etc., is lagging behind compared with the same industry abroad. Currently, the textile dyeing and finishing industry abroad tends to develop into an energy-saving, environment-friendly, automatic and efficient information industry.

As one of the textile dyeing and finishing apparatuses, spooled yarn dyeing machine with a highest working pressure of 4.5.kg/cm² and a highest working temperature of 130°C, is a low-pressure high-temperature pressure vessel. The vat cover of a spooled yarn dyeing machine is locked through engagement and disengagement of teeth uniformly distributed on the circumference of a flange of the vat cover and teeth uniformly distributed on the circumference of a flange or a hoop on the cylinder mouth of the vat, and the locking is implemented by nothing more than two kinds of structures, one of which is to realize the engagement and disengagement of the teeth by rotating the vat cover around a center with a certain angle, and the other one is to realize the engagement and disengagement of the teeth by rotating the hoop around a center with a certain angle.

Currently, the vat covers of spooled yarn dyeing machines on the market are basically locked using a manual gear rotating mechanism to manipulate the vat covers or hoops to rotate around a center with a certain angle. Because of the restricted space of the equipment structure, the pinion of such a manual gear rotating mechanism, which is pushed manually and fails to rotate continuously, rotates a limited angle each time. Thus, a locking action of a vat cover needs to be completed by repeated operations. In addition, though the temperature in the cylinder has reduced to below 80 °C, a rubber sealing ring in a groove of an end face of a flange on the cylinder mouth still expands with heat when the dyeing machine is unlocked after dyeing, which increases the rotation resistance of the vat cover. A push rod must be extended in order to increase the rotary moment to ensure that the vat cover can be rotated, which brings much inconvenience to operation. Thus it can be seen that the vat cover manual locking mechanism is labour-consuming, time-consuming, energy-consuming, high in labour costs, low in labour efficiency, and unfavourable for implementation of automated production.

WO 2011/143840 A1 discloses an automatic opening and locking device of a dewatering tank using carbon dioxide for fruits and vegetables opens, closes and rotates a cover of the tank by hydraulic or air cylinders. The cover is fixed on the tank body by means of jaws and clamping grooves and is tightened up with the tank body through rotating. The jaws are set on the cover and the clamping grooves are set on the tank body. A cover automatic opening-closing device and a cover automatic screwing device are set between the cover and the tank body.

CN 101 592 224 A discloses a circle quick door-opening device of a pressure container, which comprises an end enclosure, an upper flange and a lower flange which is connected with a tank body. The upper flange is arranged at a port of the end enclosure, the upper flange is evenly distributed with upper flange teeth along the circumferential direction, and the lower flange is evenly distributed with lower flange teeth along the circumferential direction. The device is characterized in that the device also comprises a circle which is arranged at the circumferential outsides of the upper flange and the lower flange, the upper end part of the circle is provided with upper teeth matched with the upper flange teeth to be locked, and the lower end part of the circle is provided with lower teeth matched with the lower flange teeth to be locked. Compared with the prior art, the device has the advantages that the locking and loosing of the circle are adopted for replacing the rotation of a quick opening cover, then relative rotation is not needed between the upper flange and the lower flange, and a sealing ring is abraded little in addition, only the rising and falling of the quick opening cover are considered, the rotation factor does not need to be considered, so the requirement for the fixed structure of the quick opening cover is relatively less, and the manufacturing cost can be reduced.

CN201 370 976 Y discloses an interlocking self-controlling type high pressure extracting tank, which comprises an extracting tank, a rotary flange locking the extracting tank, a rotary air cylinder driving the rotary flange as well as an uncapping air cylinder used for opening the extracting tank, the rotary air cylinder and the uncapping air cylinder are uniformly connected with a controller, the extracting tank is also provided with a pressure controller and a temperature controller, both the pressure controller and the temperature controller are uniformly and electrically connected with the controller. The interlocking self-controlling type high pressure extracting tank accurately monitors the pressure and temperature in the extracting tank by additionally arranging the pressure controller and the temperature controller on the high pressure extracting tank, and controls the rotary air cylinder and the uncapping air cylinder to rotate or open through the controller, thus achieving the aim of automatically controlling the opening and closing of a cover body according to the conditions of temperature and pressure of the high pressure extracting tank and realizing the interlocking self-controlling of the high pressure extracting tank and avoiding the appearance of safety accidents.

### Summary of the invention

The present invention aims to provide a spooled yarn dyeing machine comprising a vat cover automatic locking apparatus and to solve the technical problem that a vat cover manual locking mechanism in the prior art is labour-consuming, time-consuming, energy-consuming, high in labour costs, low in labour efficiency, and unfavourable for implementation of automated production.

In order to realize the purpose above, a spooled yarn dyeing machine is provided with a vat cover and a vat; a vat cover automatic locking apparatus is provided between the vat cover and the vat; the vat is a vertical cylindrical vat; arranged on the vat cover are teeth that are uniformly distributed along a circumference. A hoop holding the vat cover is arranged on the upper-end of the vat. The hoop is provided with an annular groove for accommodating the teeth and with an annular flange arranged above the annular groove. The annular flange is provided thereon with grooves matching the teeth. The vat cover automatic locking apparatus further comprises: a boom, arranged above the vat cover, pivotly connected at a first end to the vat cover, and pivotly connected at a second end to the hoop; a driving device having a driving end, wherein the driving end is connected to a location on the vat cover deviated from the central axis of the vat cover to drive the vat cover to rotate around the central axis of the vat cover, thereby locking or unlocking the vat cover; the vat cover automatic locking apparatus also comprises a cover opening device pivotly connected with the second end of the boom to drive the boom to rotate along the vertical direction; a control system electrically connected with the driving device to control the driving device to start or stop and electrically connected with the cover opening device to control the cover opening device to drive the boom to rotate along the vertical direction; the vat cover automatic locking apparatus further comprises: a pressure relieving device; characterized in that, the pressure relieving device is electrically connected with the control system to control the largest pressure value in the vat before the vat cover is opened; the pressure relieving device comprises: a pneumatic ball valve in communication with an interior of the vat, and a safety lever set on the pneumatic ball valve and electrically connected with the control system to receive an instruction of the control system to rotate so that the pneumatic ball valve communicates or is isolated with the atmosphere; the safety lever is horizontally set on an upper-end of the pneumatic ball valve; the safety lever is provided with a portion located above the vat cover; the vat cover is provided thereon with a position-limiting structure; in the locking in-position state, the portion of the safety lever above the vat cover abuts against the position-limiting structure to prevent the vat cover from rotating; when the safety lever is rotated so that the pneumatic ball valve communicates with the atmosphere, safety lever is located on an outer side of an outer edge of the vat cover is separated from the position-limiting structure.

Further, the driving device is a locking cylinder. A first end of the locking cylinder is pivotly connected with the boom. A piston rod is provided in the locking cylinder. One end of the piston rod is connected with a connection rod. One end of the connection rod extends out of a second end of the locking cylinder. The connection rod is pivotly connected at the upper portion of the vat cover.

Further, the vat cover automatic locking apparatus also comprises: an engaging lug fixed on the vat cover. The connection rod is pivotly connected with the upper portion of the vat cover through the engaging lug.

Further, the outer edge of the hoop is provided with an unlocking in-position travel switch and a locking in-position travel switch. A link stopper is provided on the vat cover. A first end of the link stopper is fixed on the vat cover and a second end is provided with a stopper head. When the vat cover and the vat are in a closed state, the stopper head has an unlocking in-position state to touch the unlocking in-position travel switch and a locking in-position state to touch the locking in-position travel switch. The unlocking in-position travel switch is electrically connected with the control system and transmits an unlocking in-position signal to the control system when in the unlocking in-position state. The locking in-position travel switch is electrically connected with the control system, and transmits a locking in-position signal to the control system when in the locking in-position state.

Further, an in-position magnetic induction device is provided on the locking cylinder. In the unlocking in-position state, the piston rod drives the connection rod to extend out and trigger the in-position magnetic induction device. The in-position magnetic induction device and the unlocking in-position travel switch respectively transmit an unlocking in-position signal to the control system. After receiving the unlocking in-position signal transmitted by the in-position magnetic induction device and/or the unlocking in-position travel switch, the control system controls the locking cylinder to stop acting. In the locking in-position state, the piston rod drives the connection rod to retract and trigger the in-position magnetic induction device. The in-position magnetic induction device and the locking in-position travel switch respectively transmit a locking in-position signal to the control system. After receiving the locking in-position signal transmitted by the in-position magnetic induction device and/or the locking in-position travel switch, the control system controls the locking cylinder to stop acting.

Further, the cover opening device is connected thereon with a counterbalance.

Further, the cover opening device is a cover opening cylinder.

Further, the vat cover automatic locking apparatus also comprises a pressure detecting device. The pressure detecting device is electrically connected with the control system to detect the pressure value in the vat and feed back the detected pressure value to the control system.

According to the spooled yarn dyeing machine of the present invention, a driving device is provided between a vat cover and a vat, and the vat cover is driven by a driving end of the driving device to rotate around the central axis of the vat cover to lock or unlock the vat cover. Instead of rotating the vat cover manually, the present invention rotates the vat cover using the driving effect of the driving device, which can continuously rotate the vat cover in position once with large operating force, thereby saving labour, increasing production efficiency, greatly reducing labour costs, greatly increasing the levels of mechanization and automation for the apparatus, and facilitating implementation of automated production.

### Brief description of the drawings

The accompanying drawings of the present disclosure, which constitute a part of the present application, are used for providing further understanding to the present invention. The exemplary embodiments of the present invention and the illustrations thereof are used for explaining the present invention, instead of constituting an improper limitation to the present invention. In the accompanying drawings:
Fig. 1 shows a structural diagram of a front view of a vat cover automatic locking apparatus in a locking in-position state in the third embodiment of the present invention;
Fig. 2 shows a structural diagram of a top view of a vat cover automatic locking apparatus in a locking in-position state in the third embodiment of the present invention;
Fig. 3 shows a structural diagram of a front view of a vat cover automatic locking apparatus in an unlocking in-position state in the third embodiment of the present invention; and
Fig. 4 shows a structural diagram of a top view of a vat cover automatic locking apparatus in an unlocking in-position state in the third embodiment of the present invention.

### Detailed description of the invention

It should be noted that, if there is no conflict, the embodiments in the present application and the technical features in the embodiments can be combined with one another. The present invention will be described in details below with reference to the accompanying drawings and in combination with the embodiments.

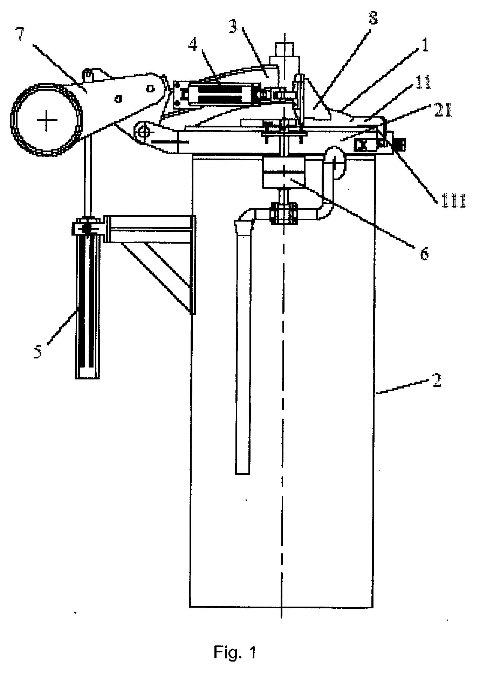

As shown in Fig. 1 to Fig. 4, a vat cover automatic locking apparatus of the present invention is arranged between a vat cover 1 and a vat 2. Arranged on the vat cover 1 are teeth 12 that are uniformly distributed along the circumference. A hoop 21 holding the vat cover 1 is arranged on the upper-end of the vat 2. The hoop 21 is provided with an annular groove for accommodating the teeth 12 and with an annular flange arranged above the annular groove. The annular flange is provided thereon with grooves 213 matching the teeth 12. The present invention further comprises: a boom 3, arranged above the vat cover 1. One end of the boom 3 is pivotly connected to the center of the vat cover 1 through a central axis and the other end is pivotly connected with the hoop 21. The present invention further comprises: a driving device, preferably a locking cylinder 4. The driving device is provided with a driving end. The driving end is connected to a location on the vat cover 1 deviated from the central axis of the vat cover 1 to drive the cylinder 1 head to rotate around the central axis of the vat cover, thereby locking or unlocking the vat cover 1.

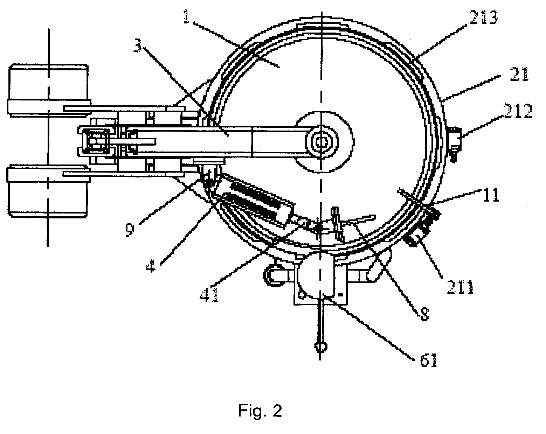

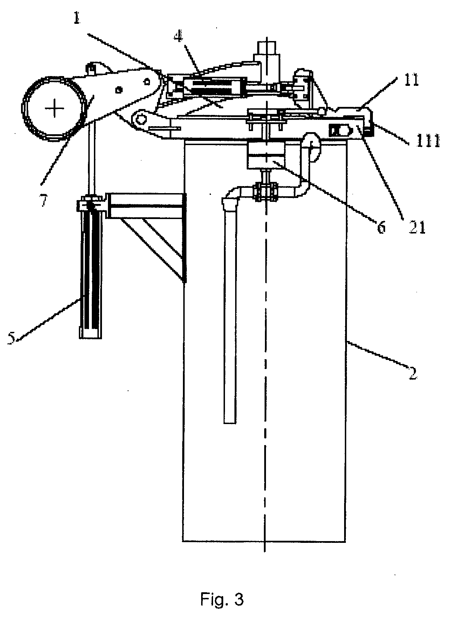

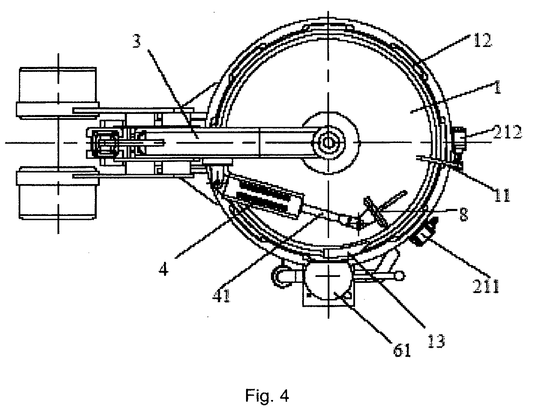

Specific embodiments of the present invention are as follows:
Embodiment 1
   a vat cover automatic locking apparatus of the present invention comprises a vat cover 1 and a vat 2. Arranged on the vat cover 1 are teeth 12 that are uniformly distributed along the circumference. A hoop 21 holding the vat cover 1 is arranged on circumference of the upper-end of the vat 2. The hoop 21 is provided with an annular groove for accommodating the teeth 12 and with an annular flange arranged above the annular groove. The annular flange is provided thereon with grooves 213 matching the teeth 12. A boom 3 is arranged above the vat cover 1. One end of the boom 3 is pivotly connected to the center of the vat cover 1 through a central axis and the other end is pivotly connected to the external circumference of the hoop 21. A location on the boom 3 away from the centre of the vat cover 1 is pivotly connected to a locking cylinder 4 through a bracket 9. A piston rod is provided in the locking cylinder 4. One end of the piston rod is connected with a connection rod 41. One end of the connection rod 41 extends out of the locking cylinder 4. The end of the connection rod 41, which extends out of the locking cylinder 4, is pivotly connected on the vat cover 1 by an engaging lug 8 fixed on the vat cover 1. Since there is a certain distance from the pivotly connected portion of the engaging lug 8 and the connection rod 41 to the vat cover 41, the locking cylinder 4 can be supported to integrally separate the locking cylinder 4 and the vat cover 1 to further prevent friction between the connection rod 41 and the vat cover 1.
   One end on the boom 3 away from the center of the vat cover 1 is pivotly connected with a cover opening cylinder 5. The cover opening cylinder 5 is set in parallel with the cylinder wall of the vat 2, and the middle portion of the cover opening cylinder 5 is fixedly connected with the vat 2 to apply a downward force to the boom 3 so as to rotate the vat cover 1 along the vertical direction to open the vat cover 1. In order to increase the force of the cover opening cylinder 5, the cover opening cylinder 5 is further connected with a counterbalance 7. The counterbalance 7 cooperates with the cover opening cylinder 5 to apply a force to the boom 3.
   The present invention further comprises a control system. The control system is electrically connected with the locking cylinder 4 to control the locking cylinder 4 to start or stop. The control system is electrically connected with the cover opening cylinder 5 to control the cover opening cylinder 5 to drive the boom 3 to rotate along the vertical direction.
   In use of the present invention, in a locking in-position state, the teeth 12 and the grooves 213 are in an unmatched position, i.e. the teeth 12 are located below the middle location between two adjacent grooves 213 on the hoop 21. At the moment, the vat cover 1 cannot be rotated along the vertical direction, thus preventing the vat cover 1 from being opened. In a pre-proceeded unlocking procedure, the control system transmits an instruction to the locking cylinder 4 to start the locking cylinder 4. The piston rod moves outwards along the locking cylinder 4 to drive the connection rod 41 to move outwards so as to push the vat cover 1 to rotate along the central axis thereof. When the vat cover rotates to a matched position of the teeth 12 and the grooves 213, i.e. the teeth 12 are located in the grooves 213, the vat cover 1 and the vat 2 are unlocked. After the unlocking, the control system transmits an instruction to the cover opening cylinder 5, and the cover opening cylinder 5 applies a force to the boom 3 so that the boom 3 pulls the vat cover 1 to rotate upwards along the vertical direction together to further open the vat cover 1.
Embodiment 2
   a vat cover automatic locking apparatus of the present invention is provided with the structure in the first embodiment. In addition, the outer edge of the hoop 21 is provided with an unlocking in-position travel switch 212 and a locking in-position travel switch 211 respectively. A link stopper 11 is provided on the vat cover 1. One end of the link stopper 11 is fixed on the vat cover 1 and the other end is provided with a stopper head 111. When the vat cover 1 and the vat 2 are in a closed state, the stopper head 111 is located between the unlocking in-position travel switch 212 and the locking in-position travel switch 211, and has an unlocking in-position state to touch the unlocking in-position travel switch 212 and a locking in-position state to touch the locking in-position travel switch 211. The unlocking in-position travel switch 212 is electrically connected with the control system. In the unlocking in-position state, the unlocking in-position travel switch 212 transmits an unlocking in-position signal to the control system. The locking in-position travel switch 211 is electrically connected with the control system. In the locking in-position state, the locking in-position travel switch 211 transmits a locking in-position signal to the control system. To enhance the signal transmission function, an in-position magnetic induction device may be further provided on the locking cylinder 4. In the unlocking in-position state, the piston rod drives the connection rod 41 to extend out and trigger the in-position magnetic induction device. At the moment, the in-position magnetic induction device and the unlocking in-position travel switch 212 respectively transmit an unlocking in-position signal to the control system. After receiving the unlocking in-position signal transmitted by the in-position magnetic induction device and/or unlocking in-position travel switch 212, the control system controls the locking cylinder 4 to stop acting. In the locking in-position state, the piston rod drives the connection rod 41 to retract and trigger the in-position magnetic induction device. At the moment, the in-position magnetic induction device and the locking in-position travel switch 211 respectively transmit a locking in-position signal to the control system. After receiving the locking in-position signal transmitted by the in-position magnetic induction device and/or locking in-position travel switch 211, the control system controls the locking cylinder 4 to stop acting.
   In use of the present invention, the control system transmits an instruction to the locking cylinder 4, and the locking cylinder 4 is started. When unlocking is in position, the stopper head 111 of the link stopper 11 touches the unlocking in-position travel switch 212, and the piston rod drives the connection rod 41 to extend out to trigger the in-position magnetic induction device. The in-position magnetic induction device and the unlocking in-position travel switch 212 respectively transmit the unlocking in-position signal. After receiving the unlocking in-position signal transmitted by the in-position magnetic induction device and/or unlocking in-position travel switch 212, the control system controls the locking cylinder 4 to stop gas supply until the unlocking procedure is completed. When locked, the automatic control system transmits an instruction to start the locking cylinder 4. When locking is in position, the stopper head 111 touches the locking in-position travel switch 211 and the piston rod drives the connection rod 41 to retract and trigger the in-position magnetic induction device. At the moment, the in-position magnetic induction device and the locking in-position travel switch 211 respectively transmit the locking in-position signal. After receiving the locking in-position signal transmitted by the in-position magnetic induction device and/or locking in-position travel switch 211, the control system controls the locking cylinder 4 to stop gas supply until the locking procedure is completed.
Embodiment 3
   The difference between a vat cover automatic locking apparatus of the present invention and that in the second embodiment is that: the vat cover automatic locking apparatus further comprises a pressure relieving device. The pressure relieving device is electrically connected with the control system to control the largest pressure value in the vat 2 before the vat cover 1 is opened, wherein the pressure relieving device preferably comprises: a pneumatic ball valve 6 in communication with the interior of the vat 2, and a safety lever 61 set on the pneumatic ball valve 6. The safety lever 61 is electrically connected with the control system to receive an instruction of the control system to rotate so that the pneumatic ball valve 6 communicates or is isolated with the atmosphere. The safety lever 61 is horizontally set on the upper-end of the pneumatic ball valve 6. The safety lever 61 is provided with a portion located above the vat cover 1. The vat cover 1 is provided thereon with a position-limiting structure 13. In the locking in-position state of the vat cover 1, the portion of the safety lever 61 above the vat cover 1 abuts against the position-limiting structure 13 to prevent the vat cover 1 from rotating. When the safety lever 61 is rotated so that the pneumatic ball valve 6 communicates with the atmosphere, the safety lever 61 is located at the outer side of the outer edge of the vat cover 1, and is separated from the position-limiting structure 13. At the moment, the locking cylinder 4 is started, and the vat cover 1 may rotate along the central axis thereof to unlock the vat cover 1. The present invention further comprises a pressure detecting device. The pressure detecting device is electrically connected with the control system, and feeds back an internal pressure value of the vat 2 detected by itself to the control system.
   In use of the present invention, the control system sets the highest pressure value at 0.2kg/cm² and the highest temperature at 85°C. As shown in Fig. 1 and Fig. 2, when the vat cover 1 and the vat 2 are in a closed state, the safety lever 61 abuts against the position-limiting structure 13 so that the vat cover 1 cannot be rotated, thus the vat cover 1 cannot be opened. In a pre-unlocking process of the apparatus, the automatic control system transmits an instruction first and the safety lever 61 is rotated so that the pneumatic ball valve 6 communicates with the atmosphere to relieve pressure. At the moment, the safety lever 61 is located at the outer side of the outer edge of the vat cover 1 and separated from the position-limiting structure 13. When detecting that the gas pressure in the vat 2 has reduced to below 0.2kg/cm², the pressure detecting device feeds back pressure value information to the control system. After receiving a feedback signal, the control system starts the locking cylinder 4. When unlocking is in position, as shown in Fig. 3 and Fig. 4, the stopper head 111 triggers the unlocking in-position travel switch 212, and the piston rod drives the connection rod 41 to extend out to trigger the in-position magnetic induction device. At the moment, the in-position magnetic induction device and the unlocking in-position travel switch 212 respectively transmit the unlocking in-position signal. After receiving the unlocking in-position signal transmitted by the in-position magnetic induction device and/or unlocking in-position travel switch 212, the control system controls the locking cylinder 4 to stop gas supply until the unlocking procedure is completed. When locked, the automatic control system transmits an instruction to start the locking cylinder 4. When locking is in position, the stopper head 111 triggers the locking in-position travel switch 211 and the piston rod drives the connection rod 41 to retract and trigger the in-position magnetic induction device. At the moment, the in-position magnetic induction device and the locking in-position travel switch 211 respectively transmit the locking in-position signal. After receiving the locking in-position signal transmitted by the in-position magnetic induction device and/or locking in-position travel switch 211, the control system controls the locking cylinder 4 to stop gas supply. After the locking cylinder 4 stops gas supply, the control system transmits an instruction to the safety lever 61, and the safety lever 61 is rotated until the safety lever 61 abuts against the position-limiting structure 13 to prevent the vat cover 1 from rotating until the locking procedure is completed.
   In the present invention, stopped by the stopper, the locking cylinder 4 can run only when the safety lever 61 is turned on to relieve pressure, thereby providing a safety protection effect. The apparatus is safe, reliable, time-saving and energy-saving with high levels of mechanization and automation of production and manufacture, and high labour efficiency.
   The present invention further provides a spooled yarn dyeing machine provided with a vat cover 1 and a vat 2. a vat cover automatic locking apparatus is provided between the vat cover 1 and the vat 2, wherein the vat cover automatic locking apparatus is the vat cover automatic locking apparatus above.
   It can be learned from the description above that, according to a vat cover automatic locking apparatus and a spooled yarn dyeing machine of the present invention, a driving device is provided between a vat cover 1 and a vat 2, and the vat cover 1 is driven by a driving end of the driving device to rotate around the central axis of the vat cover 1 to lock or unlock the vat cover 1. Instead of rotating the vat cover 1 manually, the present invention rotates the vat cover using the driving effect of the driving device, which can continuously rotate the vat cover in position once with large operating force, thereby saving labour, increasing production efficiency, greatly reducing labour costs, greatly increasing the levels of mechanization and automation for the apparatus, and facilitating implementation of automated production.
   Besides being applied in the textile dyeing and finishing industry, the vat cover automatic locking apparatus of the present invention can be further applicable to locking and unlocking vat covers 1 of other apparatuses as long as the vat covers 1 can be locked or unlocked automatically.
   The above are only preferred embodiments of the present invention and should not be used to limit the present invention. For those skilled in the art, the present invention may have various modifications and changes. Any modifications, equivalent replacements, improvements and the like within the principle of the present invention shall fall within the scope of protection of the present invention.

## Claims

1. A spooled yarn dyeing machine, provided with a vat cover (1), a vat (2) and a vat cover automatic locking apparatus between the vat cover (1) and the vat (2), wherein the vat (2) is a vertical cylindrical vat; arranged on the vat cover (1) are teeth (12) that are uniformly distributed along a circumference; a hoop (21) holding the vat cover (1) is arranged on an upper-end of the vat (2); the hoop (21) is provided with an annular groove for accommodating the teeth (12) and with an annular flange arranged above the annular groove; the annular flange is provided thereon with grooves (213) matching the teeth (12);
the vat cover automatic locking apparatus comprising:
a boom (3), arranged above the vat cover (1), pivotly connected at a first end to the vat cover (1), and pivotly connected at a second end to the hoop (21);
a driving device (4) having a driving end, wherein the driving end is connected to a location on the vat cover (1) deviated from a central axis of the vat cover (1) to drive the vat cover (1) to rotate around the central axis of the vat cover (1), thereby locking or unlocking the vat cover (1);
a cover opening device pivotly connected with the second end of the boom (3) to drive the boom (3) to rotate along the vertical direction;
a control system electrically connected with the driving device to control the driving device to start or stop and electrically connected with the cover opening device to control the cover opening device to drive the boom (3) to rotate along the vertical direction;
a pressure relieving device; the pressure relieving device is electrically connected with the control system to control the largest pressure value in the vat (2) before the vat cover (1) is opened;
wherein the pressure relieving device comprises:
a pneumatic ball valve (6) in communication with an interior of the vat (2),
and **characterized in that** the pressure relieving device further comprises:
a safety lever (61) set on the pneumatic ball valve (6) and electrically connected with the control system to receive an instruction of the control system to rotate so that the pneumatic ball valve (6) communicates or is isolated with the atmosphere;
wherein:
the safety lever (61) is horizontally set on an upper-end of the pneumatic ball valve (6); the safety lever (61) is provided with a portion located above the vat cover (1);
the vat cover (1) is provided thereon with a position-limiting structure (13);
in the locking in-position state, the portion of the safety lever (61) above the vat cover (1) abuts against the position-limiting structure (13) to prevent the vat cover (1) from rotating;
when the safety lever (61) is rotated so that the pneumatic ball valve (6) communicates with the atmosphere, the safety lever (61) is located at the outer side of the outer edge of the vat cover (1 and is separated from the position-limiting structure (13).

2. The spooled yarn dyeing machine according to claim 1, **characterized in that**, the driving device is a locking cylinder (4); a first end of the locking cylinder (4) is pivotly connected with the boom (3); a piston rod is provided in the locking cylinder (4); one end of the piston rod is connected with a connection rod (41); one end of the connection rod (41) extends out of a second end of the locking cylinder (4); the connection rod (41) is pivotly connected at an upper portion of the vat cover (1).

3. The spooled yarn dyeing machine according to claim 2, **characterized in that**, it further comprises: an engaging lug (8) fixed on the vat cover (1); the connection rod (41) is pivotly connected with the upper portion of the vat cover (1) through the engaging lug (8).

4. The spooled yarn dyeing machine according to claim 2, **characterized in that**:
an outer edge of the hoop (21) is provided with an unlocking in-position travel switch (212) and a locking in-position travel switch (211);
a link stopper (11) is provided on the vat cover (1); a first end of the link stopper (11) is fixed on the vat cover (1) and a second end is provided with a stopper head (111); when the vat cover (1) and the vat (2) are in a closed state, the stopper head (111) has an unlocking in-position state to touch the unlocking in-position travel switch (212) and a locking in-position state to touch the locking in-position travel switch (211);
the unlocking in-position travel switch (212) is electrically connected with the control system and transmits an unlocking in-position signal to the control system when in the unlocking in-position state;
the locking in-position travel switch (211) is electrically connected with the control system, and transmits a locking in-position signal to the control system when in the locking in-position state.

5. The spooled yarn dyeing machine according to claim 4, **characterized in that**, an in-position magnetic induction device is provided on the locking cylinder (4);
in the unlocking in-position state, the piston rod drives the connection rod (41) to extend out and trigger the in-position magnetic induction device; the in-position magnetic induction device and the unlocking in-position travel switch (212) respectively transmit an unlocking in-position signal to the control system; after receiving the unlocking in-position signal transmitted by the in-position magnetic induction device and/or the unlocking in-position travel switch (212), the control system controls the locking cylinder to stop acting;
in the locking in-position state, the piston rod drives the connection rod (41) to retract and trigger the in-position magnetic induction device; the in-position magnetic induction device and the locking in-position travel switch (211) respectively transmit a locking in-position signal to the control system; after receiving the locking in-position signal transmitted by the in-position magnetic induction device and/or the locking in-position travel switch (211), the control system controls the locking cylinder (4) to stop acting.

6. The spooled yarn dyeing machine according to claim 1, **characterized in that**, the cover opening device is connected thereon with a counterbalance (7).

7. The spooled yarn dyeing machine according to claim 1, **characterized in that**, the cover opening device is a cover opening cylinder (5).

8. The spooled yarn dyeing machine according to claim 1, **characterized in that**, it further comprises a pressure detecting device; the pressure detecting device is electrically connected with the control system to detect a pressure value in the vat (2) and feed back a detected pressure value to the control system.

## Patentansprüche

1. Maschine zum Färben von aufgespultem Garn, welche mit einer Lagertankabdeckung (1), einem Lagertank (2) und einer Einrichtung zum automatischen Verriegeln der Lagertankabdeckung zwischen der Lagertankabdeckung (1) und dem Lagertank (2) ausgestattet ist, wobei der Lagertank (2) ein vertikaler zylindrischer Lagertank ist; an der Lagertankabdeckung (1) Zähne (12) angeordnet sind, welche gleichmäßig entlang einem Umfang verteilt sind; ein die Lagertankabdeckung (1) haltender Reifen (21) an einem oberen Ende des Lagertanks (2) angeordnet ist; der Reifen (21) mit einer ringförmigen Nut zum Aufnehmen der Zähne (21) und mit einem oberhalb der ringförmigen Nut angeordneten ringförmigen Flansch ausgestattet ist; der ringförmige Flansch mit zu den Zähnen (12) passenden Vertiefungen (213) ausgestattet ist;
wobei die Einrichtung zum automatischen Verriegeln der Lagertankabdeckung umfasst:
einen oberhalb der Lagertankabdeckung (1) angeordneten Schwenkarm (3), welcher an einem ersten Ende mit der Lagertankabdeckung (1) drehbar verbunden ist und an einem zweiten Ende mit dem Reifen (21) drehbar verbunden ist;
eine Antriebsvorrichtung (4) mit einem Antriebsende, wobei das Antriebsende mit einer Stelle an der Lagertankabdeckung (1) verbunden ist, welche von einer Mittelachse der Lagertankabdeckung (1) abgeschwenkt ist, um die Lagertankabdeckung (1) so anzutreiben, dass sie sich um die Mittelachse der Lagertankabdeckung (1) dreht, und dadurch die Lagertankabdeckung (1) zu verriegeln oder zu entriegeln;
eine Abdeckungsöffnungsvorrichtung, welche mit dem zweiten Ende des Schwenkarms (3) drehbar verbunden ist, um den Schwenkarm (3) so anzutreiben, dass er sich entlang der vertikalen Richtung dreht;
ein Steuersystem, welches mit der Antriebsvorrichtung elektrisch verbunden ist, um die Antriebsvorrichtung zum Starten oder Anhalten zu steuern, und welches mit der Abdeckungsöffnungsvorrichtung elektrisch verbunden ist, um die Abdeckungsöffnung so zu steuern, dass sie den Schwenkarm (3) zum Drehen entlang der vertikalen Richtung antreibt;
eine Druckentlastungsvorrichtung; die Druckentlastungsvorrichtung ist mit dem Steuersystem elektrisch verbunden, um den größten Druckwert in dem Lagertank (2) zu regeln, bevor die Lagertankabdeckung (1) geöffnet wird;
wobei die Druckentlastungsvorrichtung umfasst:
ein Druckluft-Kugelventil (6), welches mit einem Inneren des Lagertanks (2) in Verbindung steht,
und **dadurch gekennzeichnet, dass** die Druckentlastungsvorrichtung ferner umfasst:
einen Sicherheitshebel (61), welcher auf dem Druckluft-Kugelventil (6) angeordnet ist und mit dem Steuersystem elektrisch verbunden ist, um einen Befehl des Steuersystems zu empfangen, sich derart zu drehen, dass das Druckluft-Kugelventil (6) mit der Umgebung kommuniziert oder davon isoliert ist;
wobei
der Sicherheitshebel (61) horizontal an einem oberen Ende des Druckluft-Kugelventils (6) angeordnet ist; der Sicherheitshebel (61) mit einem oberhalb der Lagertankabdeckung (1) liegenden Teil ausgestattet ist;
die Lagertankabdeckung (1) mit einer positionsbegrenzenden Struktur (13) darauf ausgestattet ist;
der Teil des Sicherheitshebels (61) oberhalb der Lagertankabdeckung (1) in dem arretierten Zustand gegen die positionsbegrenzende Struktur (13) stößt, um eine Drehung der Lagertankabdeckung (1) zu verhindern;
wenn der Sicherheitshebel (61) so gedreht ist, dass das Druckluft-Kugelventil (6) mit der Umgebung kommuniziert, der Sicherheitshebel (61) an der Außenseite der Außenkante der Lagertankabdeckung (1) gelegen und von der positionsbegrenzenden Struktur (13) getrennt ist.

2. Maschine zum Färben von aufgespultem Garn nach Anspruch 1, **dadurch gekennzeichnet, dass** die Antriebsvorrichtung ein Verriegelungszylinder (4) ist; ein erstes Ende des Verriegelungszylinders (4) mit dem Schwenkarm (3) drehbar verbunden ist; eine Kolbenstange in dem Verriegelungszylinder (4) angeordnet ist; ein Ende der Kolbenstange mit einer Verbindungsstange (41) verbunden ist; ein Ende der Verbindungsstange (41) aus einem zweiten Ende des Verriegelungszylinders (4) hervor steht; die Verbindungsstange (41) mit einem oberen Teil der Lagertankabdeckung (1) drehbar verbunden ist.

3. Maschine zum Färben von aufgespultem Garn nach Anspruch 2, **dadurch gekennzeichnet, dass** sie ferner umfasst: einen Eingriffsbügel (8), welcher auf der Lagertankabdeckung (1) befestigt ist; dass die Verbindungsstange (41) mit dem oberen Teil der Lagertankabdeckung (1) durch den Eingriffsbügel (8) drehbar verbunden ist.

4. Maschine zum Färben von aufgespultem Garn nach Anspruch 2, **dadurch gekennzeichnet, dass**
eine Außenkante des Reifens (21) mit einem Hubschalter zum Entriegeln der Arretierung (212) und einem Hubschalter zum Verriegeln der Arretierung (211) ausgestattet ist;
ein Verbindungsanschlag (11) an der Lagertankabdeckung (1) angeordnet ist; ein erstes Ende des Verbindungsanschlags (11) an der Lagertankabdeckung (1) befestigt ist und ein zweites Ende mit einem Anschlagkopf (111) ausgestattet ist; wenn die Lagertankabdeckung (1) und der Lagertank (2) einem geschlossenen Zustand sind, der Anschlagkopf (111) einen Arretierungs-Entriegelungs-Zustand hat, um den Hubschalter zum Entriegeln der Arretierung (212) zu berühren, und einen Arretierungs-Verriegelungszustand hat, um den Hubschalter zum Verriegeln der Arretierung (211) zu berühren;
der Hubschalter zum Entriegeln der Arretierung (212) mit dem Steuersystem elektrisch verbunden ist und ein Arretierungs-Entriegelungssignal an das Steuersystem sendet, wenn er sich in dem Arretierungs-Entriegelungszustand befindet;
der Hubschalter zum Verriegeln der Arretierung (211) mit dem Steuersystem elektrisch verbunden ist und ein Arretierungs-Verriegelungssignal an das Steuersystem sendet, wenn er sich in dem Arretierungs-Verriegelungszustand befindet.

5. Maschine zum Färben von aufgespultem Garn nach Anspruch 4, **dadurch gekennzeichnet, dass** an dem Verriegelungszylinder (4) eine Arretierungs-Magnetinduktionsvorrichtung angeordnet ist;
die Kolbenstange in dem Arretierungs-Entriegelungszustand die Verbindungsstange (41) zum Ausfahren und zum Aktivieren der Arretierung-Magnetinduktionsvorrichtung antreibt; die Arretierungs-Magnetinduktionsvorrichtung und der Hubschalter zum Entriegeln der Arretierung (212) jeweils ein Arretierungs-Entriegelungssignal an das Steuersystem senden; das Steuersystem nach Empfangen des von der Arretierungs-Magnetinduktionsvorrichtung und/oder des Hubschalters zum Entriegeln der Arretierung (212) gesendeten Arretierungs-Entriegelungssignals zum Entriegeln der Arretierung den Verriegelungszylinder steuert, den Betrieb einzustellen;
die Kolbenstange in dem Arretierungs-Verriegelungszustand die Verbindungsstange (41) zum Einfahren und zum Aktivieren der Arretierungs-Magnetinduktionsvorrichtung antreibt; die Arretierungs-Magnetinduktionsvorrichtung und der Hubschalter zum Verriegeln der Arretierung (211) jeweils ein Arretierungs-Verriegelungssignal an das Steuersystem senden; das Steuersystem nach Empfangen des von der Arretierungs-Magnetinduktionsvorrichtung und/oder des Hubschalters zum Verriegeln der Arretierung (211) gesendeten Arretierungs-Verriegelungssignals den Verriegelungszylinder (4) steuert, den Betrieb einzustellen.

6. Maschine zum Färben von aufgespultem Garn nach Anspruch 1, **dadurch gekennzeichnet, dass** die Abdeckungsöffnungsvorrichtung darauf mit einem Gegengewicht (7) verbunden ist.

7. Maschine zum Färben von aufgespultem Garn nach Anspruch 1, **dadurch gekennzeichnet, dass** die Abdeckungsöffnungsvorrichtung ein Abdeckungsöffnungszylinder (5) ist.

8. Maschine zum Färben von aufgespultem Garn nach Anspruch 1, **dadurch gekennzeichnet, dass** sie ferner eine Druckmessvorrichtung umfasst; die Druckmessvorrichtung mit dem Steuersystem elektrisch verbunden ist, um einen Druckwert in dem Lagertankt (2) zu messen und dem Steuersystem einen gemessenen Druckwert zurück zu melden.

## Revendications

1. Machine de teinture de fil bobiné pourvue d'un recouvrement de cuve (1), d'une cuve (2) et d'un appareil de verrouillage automatique de recouvrement de cuve entre le recouvrement de cuve (1) et la cuve (2), dans laquelle la cuve (2) est une cuve cylindrique verticale ; des dents (12) qui sont distribuées uniformément le long d'une circonférence sont agencées sur le recouvrement de cuve (1) ; un cercle (21) maintenant le recouvrement de cuve (1) est agencé sur une extrémité supérieure de la cuve (2) ; le cercle (21) est pourvu d'une rainure annulaire pour héberger les dents (12) et d'une bride annulaire agencée au-dessus de la rainure annulaire ; la bride annulaire est pourvue sur elle de rainures (213) correspondant aux dents (12) ;
l'appareil de verrouillage automatique de recouvrement de cuve comprenant :
une flèche (3) agencée au-dessus du recouvrement de cuve (1), connectée à pivotement à une première extrémité au recouvrement de cuve (1) et connectée à pivotement à une seconde extrémité au cercle (21) ;
un dispositif d'entraînement (4) ayant une extrémité d'entraînement, dans laquelle l'extrémité d'entraînement est connectée à un emplacement sur le recouvrement de cuve (1) dévié d'un axe central du recouvrement de cuve (1) pour entraîner le recouvrement de cuve (1) à tourner autour de l'axe central du recouvrement de cuve (1), verrouillant ou déverrouillant de ce fait le recouvrement de cuve (1) ;
un dispositif d'ouverture de recouvrement connecté à pivotement à la seconde extrémité de la flèche (3) pour entraîner la flèche (3) à tourner le long de la direction verticale ;
un système de commande connecté électriquement au dispositif d'entraînement pour commander le dispositif d'entraînement à démarrer ou stopper et connecté électriquement au dispositif d'ouverture de recouvrement pour commander le dispositif d'ouverture de recouvrement à entraîner la flèche (3) à tourner le long de la direction verticale ;
un dispositif limiteur de pression ; le dispositif limiteur de pression est connecté électriquement au système de commande pour commander la valeur de pression la plus élevée dans la cuve (2) avant que le recouvrement de cuve (1) ne soit ouvert ;
dans laquelle le dispositif limiteur de pression comprend :
un clapet à bille pneumatique (6) en communication avec un intérieur de la cuve (2),
et **caractérisée en ce que** le dispositif limiteur de pression comprend en outre :
un levier de sûreté (61) posé sur le clapet à bille pneumatique (6) et connecté électriquement au système de commande pour recevoir une instruction du système de commande de tourner de sorte que le clapet à bille pneumatique (6) communique ou est isolé avec l'atmosphère ;
dans laquelle :
le levier de sûreté (61) est posé horizontalement sur une extrémité supérieure du clapet à bille pneumatique (6) ; le levier de sûreté (61) est pourvu d'une portion située au-dessus du recouvrement de cuve (1) ;
le recouvrement de cuve (1) est pourvu sur lui d'une structure de limitation de position (13) ;
dans l'état en place de verrouillage, la portion du levier de sûreté (61) au-dessus du recouvrement de cuve (1) bute contre la structure de limitation de position (13) pour empêcher le recouvrement de cuve (1) de tourner ;
lorsque le levier de sûreté (61) est tourné de sorte que le clapet à bille pneumatique (6) communique avec l'atmosphère, le levier de sûreté (61) est situé sur le côté externe du bord externe du recouvrement de cuve (1) et est séparé de la structure de limitation de position (13).

2. Machine de teinture de fil bobiné selon la revendication 1, **caractérisée en ce que** le dispositif d'entraînement est un cylindre de verrouillage (4) ; une première extrémité du cylindre de verrouillage (4) est connectée à pivotement à la flèche (3) ; une tige de piston est prévue dans le cylindre de verrouillage (4) ; une extrémité de la tige de piston est connectée à une tige de connexion (41) ; une extrémité de la tige de connexion (41) s'étend hors d'une seconde extrémité du cylindre de verrouillage (4) ; la tige de connexion (41) est connectée à pivotement au niveau d'une portion supérieure du recouvrement de cuve (1).

3. Machine de teinture de fil bobiné selon la revendication 2, **caractérisée en ce qu'**elle comprend en outre : une languette d'engagement (8) fixée sur le recouvrement de cuve (1) ; la tige de connexion (41) est connectée à pivotement à la portion supérieure du recouvrement de cuve (1) à travers la languette d'engagement (8).

4. Machine de teinture de fil bobiné selon la revendication 2, **caractérisée en ce que** :
un bord externe du cercle (21) est pourvu d'un commutateur de déplacement en place de déverrouillage (212) et d'un commutateur de déplacement en place de verrouillage (211) ;
une butée de liaison (11) est prévue sur le recouvrement de cuve (1) ; une première extrémité de la butée de liaison (11) est fixée sur le recouvrement de cuve (1) et une seconde extrémité est pourvue d'une tête de butée (111) ; lorsque le recouvrement de cuve (1) et la cuve (2) sont dans un état fermé, la tête de butée (111) a un état en place de déverrouillage pour toucher le commutateur de déplacement en place de déverrouillage (212) et un état en place de verrouillage pour toucher le commutateur de déplacement en place de verrouillage (211);
le commutateur de déplacement en place de déverrouillage (212) est connecté électriquement au système de commande et transmet un signal en place de déverrouillage au système de commande lorsqu'il est dans l'état en place de déverrouillage ;
le commutateur de déplacement en place de verrouillage (211) est connecté électriquement au système de commande et transmet un signal en place de verrouillage au système de commande lorsqu'il est dans l'état en place de verrouillage.

5. Machine de teinture de fil bobiné selon la revendication 4, **caractérisée en ce qu'**un dispositif d'induction magnétique en place est prévu sur le cylindre de verrouillage (4) ;
dans l'état en place de déverrouillage, la tige de piston entraîne la tige de connexion (41) pour s'étendre vers l'extérieur et déclencher le dispositif d'induction magnétique en place ; le dispositif d'induction magnétique en place et le commutateur de déplacement en place de déverrouillage (212) transmettent respectivement un signal en place de déverrouillage au système de commande ; après réception du signal en place de déverrouillage transmis par le dispositif d'induction magnétique en place et/ou le commutateur de déplacement en place de déverrouillage (212), le système de commande commande au cylindre de verrouillage d'arrêter d'agir ;
dans l'état en place de verrouillage, la tige de piston entraîne la tige de connexion (41) pour se rétracter et déclencher le dispositif d'induction magnétique en place ; le dispositif d'induction magnétique en place et le commutateur de déplacement en place de verrouillage (211) transmettent respectivement un signal en place de verrouillage au système de commande ; après réception du signal en place de verrouillage transmis par le dispositif d'induction magnétique en place et/ou le commutateur de déplacement en place de verrouillage (211), le système de commande commande au cylindre de verrouillage (4) d'arrêter d'agir.

6. Machine de teinture de fil bobiné selon la revendication 1, **caractérisée en ce que** le dispositif d'ouverture de recouvrement est connecté sur lui à un contrepoids (7).

7. Machine de teinture de fil bobiné selon la revendication 1, **caractérisée en ce que** le dispositif d'ouverture de recouvrement est un cylindre d'ouverture de recouvrement (5).

8. Machine de teinture de fil bobiné selon la revendication 1, **caractérisée en ce qu'**elle comprend en outre un dispositif de détection de pression ; le dispositif de détection de pression est connecté électriquement au système de commande pour détecter une valeur de pression dans la cuve (2) et faire un retour sur une valeur de pression détectée au système de commande.
